# EUROPEAN PATENT SPECIFICATION

(11) **EP 4 371 827 B1**
(45) Date of publication and mention of the grant of the patent: **07.01.2026**
(21) Application number: 22208467.5
(22) Date of filing: 21.11.2022
(51) Int. Cl.: B60R 16/02, F16L 3/223, H02G 3/34

(54) **FIXING ARRANGEMENT AND VEHICLE**
BEFESTIGUNGSANORDNUNG UND FAHRZEUG
DISPOSITIF DE FIXATION ET VÉHICULE

(43) Date of publication of application: 22.05.2024
(73) Proprietor: Scania CV AB, 151 87 Södertälje (SE)
(72) Inventor: CANDELL, Magnus, 152 52 Södertälje (SE)
(74) Representative: Scania CV AB

(56) References cited:
- EP-A2- 2 149 732
- JP-A- H10 281 224
- JP-B2- 6 037 811
- JP-B2- 7 166 999
- US-B2- 10 293 769

## Description

### TECHNICAL FIELD

The present disclosure relates to a fixing arrangement configured to fixate a number of elongated objects relative to a portion of a vehicle. The present disclosure further relates to a vehicle comprising a number of elongated objects and a fixing arrangement, wherein the fixing arrangement is configured to fixate the number of elongated objects relative to a portion of the vehicle.

### BACKGROUND

Modern vehicles comprise a large number of systems and components and technical development, including the current trend of electrification, has increased this number of systems and components considerably. The increased number of systems and components in modern vehicles can lead to packing problems, i.e., problems in fitting and arranging all components and systems in the available space in the vehicle in an efficient manner. Moreover, many of these components and system require one or more of electrical cables, wire arrangements, and ducts for supplying energy, signals, and/or fluids, such as coolant, air, or oil, to and from the component or system.

The number of such types of elongated objects has also increased considerably in vehicles due to technical development, including the current trend of electrification, which can lead to problems in fitting and arranging all elongated objects in the available space in a vehicle in an efficient manner. Traditionally, these types of elongated objects are fixed relative to a vehicle using one or more bracket arrangements, straps, or the like. Upon assembly of the vehicle, as well as during service, repair, and maintenance of the vehicle, the fixing of these types of elongated objects is usually burdensome and time consuming.

Moreover, when fixing an elongated object, such as an electrical cable, a wire arrangement, or a duct, relative to a portion of the vehicle, it is usually important that the elongated object is securely fixated relative to the portion of the vehicle. That is, if an elongated object, such as an electrical cable, a wire arrangement, or a duct, becomes detached during operation of the vehicle, it may impair functionality of one or more systems or components of the vehicle, and it may also lead to potentially dangerous situations.

Furthermore, generally, on today's consumer market, it is an advantage if products, such as vehicles and associated components, systems, and arrangements, have conditions and/or characteristics suitable for being manufactured and assembled in a cost-efficient manner. JP 6 037811 B2 discloses a vibration-proof clip for fixing a rod-like body. The clip may be used to fix the rod-like body such as a pipe, a tube, or a cable to a fixed member such as a panel of a vehicle.

### SUMMARY

It is an object of the present invention to overcome, or at least alleviate, at least some of the above-mentioned problems and drawbacks.

According to a first aspect of the invention, the object is achieved by a fixing arrangement configured to fixate a number of elongated objects relative to a portion of a vehicle. The fixing arrangement comprises a first fixating member comprising a plurality of first protrusions and a second fixating member comprising a plurality of second protrusions. The plurality of first protrusions comprises a number of first protrusions each configured to protrude into a gap between two adjacent second protrusions to fixate an elongated object in a space formed between a tip of the first protrusion and the two adjacent second protrusions. The plurality of second protrusions comprises a number of second protrusions each configured to protrude into a gap between two adjacent first protrusions to fixate an elongated object in a space formed between a tip of the second protrusion and the two adjacent first protrusions.

Thereby, a fixing arrangement is provided having conditions for significantly facilitating the process of fixating a number of elongated objects relative to a portion of a vehicle. This is because an assembler, or an assembling machine, may position a number of elongated objects in the gaps between pairs of adjacent first protrusions of the first fixating member and may position a number of elongated objects between pairs of adjacent second protrusions of the second fixating member. Then, an assembler, or an assembling machine, may move the first and second fixating members relative to each other such that the number of first protrusions of the first fixating member protrude into the gaps of the of the second fixating member and such that the number of second protrusions of the second fixating member protrude into the gaps of the of the first fixating member.

Accordingly, due to these features, the fixing arrangement provides conditions for a quick, simple, and cost-efficient fixation of elongated objects relative to the portion of the vehicle. As a further result, a fixing arrangement is provided having conditions for reducing assembling costs and manufacturing costs of vehicles.

Moreover, the fixing arrangement provides conditions for a quick, simple, and cost-efficient removal of fixation of the elongated objects from the portion of the vehicle, for example during service, repair, and maintenance of the vehicle.

Furthermore, a fixing arrangement is provided having conditions for fixating a large number of elongated objects relative to a portion of a vehicle in a space-efficient manner. That is, the fixing arrangement has conditions for fixating a large number of elongated objects using a small total space.

This is because a number of elongated objects can be fixated between pairs of adjacent second protrusions and tips of first protrusions and a number of elongated objects can also be fixated between pairs of adjacent first protrusions and tips of second protrusions. In other words, a fixing arrangement is provided capable of alleviating packing problems of elongated objects, such as electrical cables, wire arrangements, and ducts, in vehicles.

In addition, a fixing arrangement is provided capable of fixing elongated objects, such as electrical cables, wire arrangements, and ducts, in a reliable and secure manner. This is because the fixing arrangement is configured to fixate the elongated objects in the spaces formed between tips of first protrusions of the first fixating member and adjacent second protrusions of the second fixating member as well as in spaces formed between tips of second protrusions of the second fixating member and adjacent first protrusions of the first fixating member.

Accordingly, a fixing arrangement is provided overcoming, or at least alleviating, at least some of the above-mentioned problems and drawbacks. As a result, the above-mentioned object is achieved.

Optionally, the number of first protrusions comprises two or more first protrusions, and wherein the number of second protrusions comprises two or more second protrusions. Thereby, a fixing arrangement is provided capable of fixating at least four elongated object relative to the portion of the vehicle in a simple, secure, space-efficient, and cost-efficient manner.

Optionally, the sum of the plurality of first and second protrusions minus the sum of the number of first and second protrusions is equal to two. Thereby, conditions are provided for first and second fixating members having substantially identical but mirrored design. Moreover, a fixing arrangement is provided having conditions for fixating a large number of elongated object relative to the portion of the vehicle in a simple, secure, space-efficient, and cost-efficient manner.

Optionally, the first fixating member comprises a base portion, wherein each of the plurality of first protrusions protrudes from the base portion, and wherein each of the number of second protrusions is configured to protrude into a gap between two adjacent first protrusions to fixate an elongated object in a space formed between the tip of the second protrusion, the base portion of the first fixating member, and the two adjacent first protrusions. Thereby, conditions are provided for an even more secure and reliable fixing of the number of elongated objects relative to the portion of the vehicle.

Optionally, the tip of each of the number of second protrusions is located closer to the base portion of the first fixating member than the tip of each of the number of first protrusions when the fixing arrangement is in an assembled state. Thereby, conditions are provided for a space-efficient fixing of the number of elongated objects relative to the portion of the vehicle.

Optionally, the second fixating member comprises a base portion, wherein each of the plurality of second protrusions protrudes from the base portion, and wherein each of the number of first protrusions is configured to protrude into a gap between two adjacent second protrusions to fixate an elongated object in a space formed between the tip of the first protrusion, the base portion of the second fixating member, and the two adjacent second protrusions. Thereby, conditions are provided for an even more secure and reliable fixing of the number of elongated objects relative to the portion of the vehicle.

Optionally, the tip of each of the number of first protrusions is located closer to the base portion of the second fixating member than the tip of each of the number of second protrusions when the fixing arrangement is in an assembled state. Thereby, conditions are provided for a space-efficient fixing of the number of elongated objects relative to the portion of the vehicle.

Optionally, at least some of the plurality of first protrusions are tapered. Thereby, a fixing arrangement is provided having conditions for fixating the number of elongated objects relative to the portion of the vehicle in a further secure and reliable manner. In addition, the assembly of the fixing arrangement, and thus the process of fixing of the elongated objects relative to the portion of the vehicle, can be further facilitated.

Optionally, the first fixating member comprises a base portion, and wherein at least some of the number of first protrusions protrude from the base portion and are tapered in a direction from the base portion. Thereby, a fixing arrangement is provided having conditions for fixating the number of elongated objects relative to the portion of the vehicle in a further secure and reliable manner. In addition, the assembly of the fixing arrangement can be facilitated.

Optionally, at least some of the plurality of second protrusions are tapered. Thereby, a fixing arrangement is provided having conditions for fixating the number of elongated objects relative to the portion of the vehicle in an even further secure and reliable manner. In addition, the assembly of the fixing arrangement, and thus the process of fixing of the elongated objects relative to the portion of the vehicle, can be facilitated.

Optionally, the second fixating member comprises a base portion, and wherein at least some of the number of second protrusions protrude from the base portion and are tapered in a direction from the base portion. Thereby, a fixing arrangement is provided having conditions for fixating the number of elongated objects relative to the portion of the vehicle in a further secure and reliable manner. In addition, the assembly of the fixing arrangement, and thus the process of fixing of the elongated objects relative to the portion of the vehicle, can be facilitated.

Optionally, the fixing arrangement is configured to fixate elongated objects extending through the spaces along a first direction, and wherein at least some of the number of first and second protrusions are tapered in a plane perpendicular to the first direction. Thereby, a fixing arrangement is provided having conditions for fixating the number of elongated objects relative to the portion of the vehicle in a further secure and reliable manner. In addition, the assembly of the fixing arrangement, and thus the process of fixing of the elongated objects relative to the portion of the vehicle, can be facilitated.

Optionally, at least one of the first and second fixating members is formed by an elastic material. Thereby, conditions are provided for a more resilient support and fixation of the elongated objects. Moreover, a fixing arrangement is provided having conditions for fixating the number of elongated objects relative to the portion of the vehicle in a more reliable and secure manner. In addition, the assembly of the fixing arrangement can be facilitated, and wear and tear of the elongated objects can be avoided during use of the vehicle.

Optionally, the first fixating member is formed by an elastic material, and wherein at least some of the number of first protrusions comprise a through hole. The elastic material and the through holes together result in an improved deformation characteristics of the first protrusions comprising a through hole. Thereby, conditions are provided for a more resilient support and fixation of the elongated objects. Moreover, due to the improved deformation characteristics, conditions are provided for at least partially deforming the number of first protrusions upon assembly of the fixing arrangement. In this manner, an even safer and more reliable fixing of the number of elongated objects relative to the portion of the vehicle can be provided.

Optionally, the fixing arrangement is configured to fixate elongated objects extending through the spaces along a first direction, and wherein the angle between the first direction and a centre line of the through hole/through holes is less than 25 degrees or is less than 15 degrees. In other words, according to these embodiments, the centre line of the through hole or through holes is substantially parallel to the first direction, i.e., is substantially parallel to the extension direction of the elongated objects through the fixing arrangement. In this manner, improved deformation characteristics of the first protrusions comprising a through hole can be further ensured. Moreover, conditions are provided for a more resilient support and fixation of the elongated objects.

Optionally, the fixing arrangement comprises a first bracket member attached to the first fixating member and a second bracket member attached to the second fixating member, and wherein the first fixating member is configured to be assembled relative to the second fixating member by attaching the first bracket member to the second bracket member. Thereby, a fixing arrangement is provided having conditions for being assembled in a quick, simple, and cost-efficient manner for fixating elongated objects relative to the portion of the vehicle.

Moreover, due to these features, conditions are provided for a quick, simple, and cost-efficient disassembly of the fixing arrangement, for example when wanting to remove one or more of the elongated objects from the portion of the vehicle during service, repair, and maintenance of the vehicle.

Optionally, the first bracket member is configured to be attached to the second bracket member using a number of fastening elements. Thereby, a fixing arrangement is provided having conditions for being assembled in a quick, simple, and cost-efficient manner for fixating elongated objects relative to the portion of the vehicle.

Moreover, since the first bracket member is configured to be attached to the second bracket member using a number of fastening elements, conditions are provided for a quick, simple, and cost-efficient disassembly of the fixing arrangement, for example when wanting to remove one or more of the elongated objects from the portion of the vehicle during service, repair, and maintenance of the vehicle.

Optionally, the first fixating member comprises a number of through holes, and wherein the fixing arrangement comprises a number of holding members attaching the first bracket member to the first fixating member by protruding through the number of through holes. Thereby, a fixing arrangement is provided having conditions for being manufactured and assembled in a cost-efficient manner while being able to fixate elongated object relative to the portion of the vehicle in a secure and reliable manner.

Optionally, the second fixating member comprises a number of through holes, and wherein the fixing arrangement comprises a number of holding members attaching the second bracket member to the second fixating member by protruding through the number of through holes. Thereby, a fixing arrangement is provided having conditions for being manufactured and assembled in a cost-efficient manner.

According to a second aspect of the invention, the object is achieved by a vehicle comprising a number of elongated objects and a fixing arrangement according to some embodiments of the present disclosure, wherein the fixing arrangement is configured to fixate the number of elongated objects relative to a portion of the vehicle. Since the vehicle comprises a fixing arrangement according to some embodiments, a vehicle is provided overcoming, or at least alleviating, at least some of the above-mentioned problems and drawbacks. As a result, the above-mentioned object is achieved.

Optionally, the vehicle comprises an electric propulsion system and a high voltage electrical system configured to provide electricity to the electric propulsion system, and wherein the number of elongated objects comprises one or more electrical cables of the high voltage electrical system. Thereby, a vehicle is provided having conditions for fixating a number of electrical cables of the high voltage electrical system relative to the portion of the vehicle in a simple, secure, space-efficient, and cost-efficient manner.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 schematically illustrates a vehicle according to some embodiments,
Fig. 2 illustrates a perspective view of a section of the vehicle illustrated in Fig. 1,
Fig. 3 illustrates a fixing arrangement according to the embodiments illustrated in Fig. 2 in an unassembled state,
Fig. 4 illustrates the fixing arrangement illustrated in Fig. 3 in an assembled state,
Fig. 5 illustrates a fixing arrangement according to some further embodiments in an unassembled state, and
Fig. 6 illustrates the fixing arrangement according to the embodiments illustrated in Fig. 5 in an assembled state.

### DETAILED DESCRIPTION

Aspects of the present invention will now be described more fully. Like reference signs refer to like elements throughout. Well-known functions or constructions will not necessarily be described in detail for brevity and/or clarity.

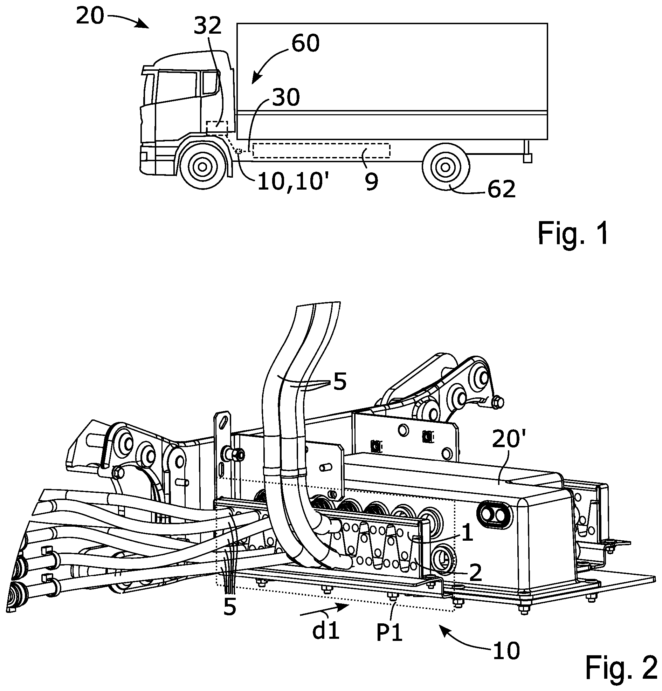

Fig. 1 schematically illustrates a vehicle 20 according to some embodiments of the present disclosure. According to the illustrated embodiments, the vehicle 20 is a truck, i.e., a type of heavy vehicle. According to further embodiments, the vehicle 20, as referred to herein, may be another type of heavy or lighter type of manned or unmanned vehicle for land or water-based propulsion such as a lorry, a bus, a construction vehicle, a tractor, a car, a ship, a boat, or the like.

According to the illustrated embodiments, the vehicle 20 comprises an electric propulsion system 60 configured to provide motive power to the vehicle 20 via wheels 62 of the vehicle 20. The electric propulsion system 60 comprises an electric propulsion motor 32. The vehicle 20 comprises a high voltage electrical system 30 configured to provide electricity to the electric propulsion system 60. Moreover, the vehicle 20 comprises a number of propulsion batteries 9 connected to the high voltage electrical system 30. The number of propulsion batteries 9 is operably connected to the electric propulsion motor 32 via the high voltage electrical system 30. In other words, the number of propulsion batteries 9 is configured to provide electricity to the electric propulsion motor 32 of the electric propulsion system 60 via the high voltage electrical system 30.

The number of propulsion batteries 9 may comprise a number of rechargeable battery cells, such as a number of lithium-ion battery cells, or the like. The high voltage electrical system 30 has a nominal voltage within the so-called Voltage Class B, usually abbreviated VCB, namely a nominal voltage equal to, or higher than, 60 volts.

According to the illustrated embodiments, the powertrain 60 of the vehicle 20 is a pure electric powertrain, i.e., a powertrain comprising no internal combustion engine. According to further embodiments, the powertrain 60 of the vehicle 20 may be a so-called hybrid electric powertrain comprising a combustion engine in addition to the electric propulsion motor 32 for providing motive power to the vehicle 20. Moreover, according to some further embodiments, the powertrain 60 of the vehicle 20 may comprise a combustion engine as the only source of power for providing motive power to the vehicle 20.

Fig. 2 illustrates a perspective view of a section of the vehicle 20 illustrated in Fig. 1. In Fig. 2, a number of elongated objects 5 of the vehicle 20 illustrated in Fig. 1 can be seen. Below, simultaneous reference is made to Fig. 1 and Fig. 2, if not indicated otherwise. According to the illustrated embodiments, the number of elongated objects 5 is a number of electrical cables of the high voltage electrical system 60 of the vehicle 20. According to further embodiments, the elongated objects 5, as referred to herein, may comprise one or more other type of elongated object, such as for example a wire arrangement, a duct for supplying a fluid, such as coolant, air, or oil, or another type of electric cable, such as an electric cable for transferring signals or energy at a nominal voltage within the so-called Voltage Class A, usually abbreviated VCA, namely a nominal voltage lower than 60 volts.

Moreover, in Fig. 2, a fixing arrangement 10 of the vehicle 20 can be seen. The fixing arrangement 10 is also schematically indicated in Fig. 1. The fixing arrangement 10 is configured to fixate the number of elongated objects 5 relative to a portion 20' of the vehicle 20. According to the illustrated embodiments, the portion 20' of the vehicle 20 is an electrical junction box, as is further explained herein. According to further embodiments, the fixing arrangement 10 may be configured to fixate a number of elongated objects 5 relative to another type of portion of a vehicle 20.

In Fig. 2, a first direction d1 is indicated. The elongated objects 5 extend through the fixing arrangement 10 along the first direction d1.

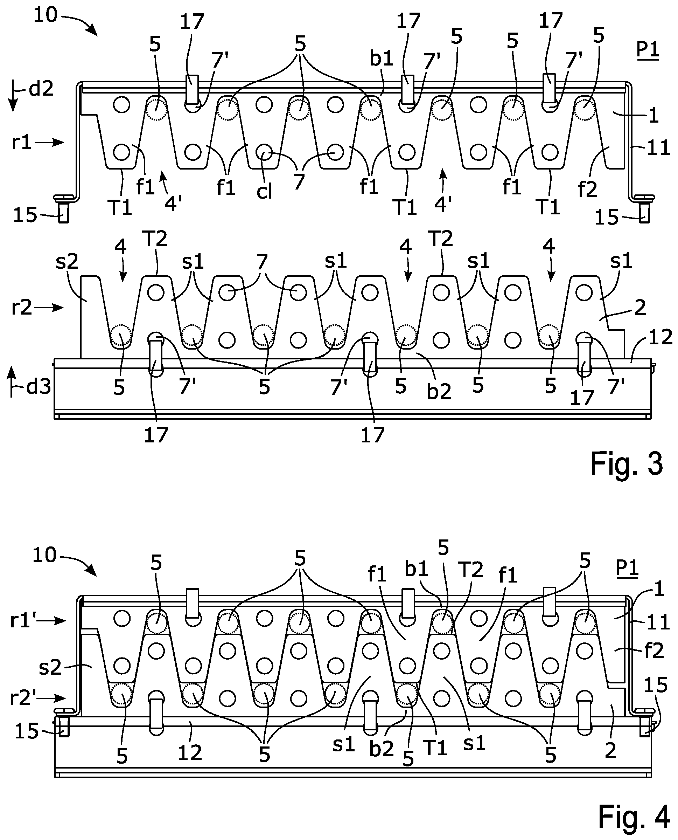

**Fig. 3** illustrates a fixing arrangement 10 according to the embodiments illustrated in Fig. 2 in an unassembled state. Moreover, in Fig. 3, a number of elongated objects 5 is schematically indicated in dotted lines. In Fig. 3, the fixing arrangement 10 is illustrated as seen along the first direction indicated in Fig. 2.

The fixing arrangement 10 comprises a first fixating member 1 comprising a plurality of first protrusions f1, f2. Moreover, the fixing arrangement 10 comprises a second fixating member 2 comprising a plurality of second protrusions s1, s2. According to the embodiments illustrated in Fig. 3, each of the first and second fixating members 1, 2 comprises eight protrusions f1, f2, s1, s2. According to further embodiments, each of the first and second fixating members 1, 2 may comprise another number of protrusions f1, f2, s1, s2, as is further explained herein.

According to the illustrated embodiments, the first fixating member 1 comprises a base portion b1. The base portion b1 of the first fixating member 1 may also be referred to as a first base portion. Each of the plurality of first protrusions f1, f2 protrudes from the base portion b1. The plurality of first protrusions f1, f2 forms a first row r1 of first protrusions f1, f2 along the base portion b1 of the first fixating member 1.

According to the illustrated embodiments, the base portion b1 of the first fixating member 1 is at least substantially straight. Thus, according to the illustrated embodiments, the first row r1 of first protrusions f1, f2 is a straight row of first protrusions f1, f2 protruding from the base portion b1 of the first fixating member 1. Moreover, according to the illustrated embodiments, the first protrusions f1, f2 are substantially equally spaced along the base portion b1 of the first fixating member 1.

According to further embodiments, the base portion b1 and the plurality of first protrusions f1, f2 arranged thereon may have another design. For example, the base portion b1 of the first fixating member 1 may be curved. According to such embodiments, the first row r1 of first protrusions f1, f2 may be a curved row of first protrusions f1, f2 protruding from the base portion b1 of the first fixating member 1.

In Fig. 3, a number of gaps 4' between pairs of adjacent first protrusions f1, f2 is indicated. For reasons of brevity and clarity, only two of the gaps 4' have been provided with the reference sign "4'" in Fig. 3. However, according to the illustrated embodiments, the first fixating member 1 comprises seven gaps 4' between pairs of adjacent first protrusions f1, f2.

This is because the first fixating member 1 according to the illustrated embodiments comprises eight first protrusions f1, f2 in total as explained above.

Moreover, each of the plurality of first protrusions f1, f2 of the first fixating member 1 comprises a tip T1. However, in Fig. 3, only three tips T1 of the plurality of first protrusions f1, f2 have been indicated with the reference sign T1 for reasons of brevity and clarity. The wording tip T1 of a first protrusion f1, f2 as referred to herein means a distal end of a first protrusion f1, f2 as seen in a direction d2 from the base portion b1 of the first fixating member 1.

Likewise, the second fixating member 2 comprises a base portion b2. The base portion b2 of the second fixating member 2 may also be referred to as a second base portion. Each of the plurality of second protrusions s1, s2 protrudes from the base portion b2. The plurality of second protrusions s1, s2 forms a second row r2 of second protrusions s1, s2 along the base portion b2 of the second fixating member 2. According to the illustrated embodiments, the base portion b2 of the second fixating member 2 is at least substantially straight. Thus, according to the illustrated embodiments, the second row r2 of second protrusions s1, s2 is a straight row of second protrusions s1, s2 protruding from the base portion b2 of the second fixating member 2. Moreover, according to the illustrated embodiments, the second protrusions s1, s2 are substantially equally spaced along the base portion b2 of the second fixating member 2.

Like above, according to further embodiments, the base portion b2 of the plurality of second protrusions s1, s2 arranged thereon may have another design. For example, the base portion b2 of the second fixating member 2 may be curved. According to such embodiments, the second row r2 of second protrusions s1, s2 may be a curved row of second protrusions s1, s2 protruding from the base portion b2 of the second fixating member 2.

In Fig. 3, a number of gaps 4 between pairs of adjacent second protrusions s1, s2 is indicated. For reasons of brevity and clarity, only three of the gaps 4 have been provided with the reference sign "4" in Fig. 3. However, according to the illustrated embodiments, the second fixating member 2 comprises seven gaps 4 between pairs of adjacent second protrusions s1, s2. This is because the second fixating member 2 comprises eight second protrusions s1, s2 in total as explained above.

The wording two adjacent second protrusions s1, s2, as used herein, means two neighbouring second protrusions s1, s2, i.e., two immediately adjacent second protrusions s1, s2. Likewise, the wording two adjacent first protrusions f1, f2, as used herein, means two neighbouring first protrusions f1, f2, i.e., two immediately adjacent first protrusions f1, f2.

Moreover, each of the plurality of second protrusions s1, s2 of the second fixating member 2 comprises a tip T2. However, in Fig. 3, only two tips T2 of the plurality of second protrusions s1, s2 have been indicated with the reference sign T2 for reasons of brevity and clarity. The wording tip T2 of a second protrusion s1, s2 as referred to herein means a distal end of a second protrusion s1, s2 as seen in a direction d3 from the base portion b2 of the second fixating member 2.

As explained in the following, the first and second fixating members 1, 2 are configured to be moved relative to each other along directions d2, d3 such that each of a number of first protrusions f1 of the plurality of first protrusions f1, f2 of the first fixating member 1 protrude into a gap 4 between two adjacent second protrusions s1, s2 of the plurality of second protrusions s1, s2 of the second fixating member 2 and such that each of a number of second protrusions s1 of the plurality of second protrusions s1, s2 of the second fixating member 2 protrude into a gap 4' between two adjacent first protrusions f1, f2 of the plurality of first protrusions f1, f2 of the first fixating member 1.

**Fig. 4** illustrates the fixing arrangement 10 illustrated in Fig. 3 in an assembled state. The assembled state corresponds to a state in which the first and second fixating members 1, 2 have been moved relative to each other along the directions d2, d3 indicated in Fig. 3 to the assembled state illustrated in Fig. 4. However, obviously, the assembled state can also be obtained by moving the first fixating member 1 relative to the second fixating member 2 in the direction d2 indicated in Fig. 3 while the second fixating member 2 is stationary, and vice versa.

The directions d2, d3 in Fig. 3 and Fig. 4 may be referred to as assembly directions. The direction d3 is opposite to the direction d2. According to the illustrated embodiments, each of the directions d2, d3 is perpendicular to an extension direction of the base portions b1, b2 of the respective first and second fixating members 1, 2, as well as is perpendicular to the first direction d1 indicated in Fig. 2.

Below, simultaneous reference is made to Fig. 1 - Fig. 4, if not indicated otherwise. When the fixing arrangement 10 is in the assembled state, each of the number of first protrusions f1 of the plurality of first protrusions f1, f2 protrudes into a gap 4 between two adjacent second protrusions s1, s2 of the plurality of second protrusions s1, s2 to fixate an elongated object 5 in a space formed between the tip T1 of the first protrusion f1, the base portion b2 of the second fixating member 2, and the two adjacent second protrusions s1, s2 of the plurality of second protrusions s1, s2.

In Fig. 4, only one tip T1 of the number of first protrusions f1 of the first fixating member 1 has been indicated with the reference sign "T1" for reasons of brevity and clarity. Likewise, in Fig. 4, only two adjacent second protrusions s1 of the plurality of second protrusions s1, s2 of the second fixating member 2 have been marked with the reference sign "s1" for reasons of brevity and clarity. Furthermore, in Fig. 4, the gaps between adjacent first and second protrusions f1, f2, s1, s2 have not been provided with reference signs for reasons of brevity and clarity.

According to the embodiments illustrated in Fig. 3 and Fig. 4, the first and second fixating members 1, 2 are configured such that the elongated object 5 obtains an abutting contact against the tip T1 of the first protrusion f1 of the first fixating member 1 and the two adjacent second protrusions s1, s2 of the second fixating member 2, when the fixing arrangement 10 is in the assembled state. However, according to further embodiments, the first and second fixating members 1, 2 may be configured in another manner, for example such that the elongated object 5 obtains an abutting contact against the tip T1 of the first protrusion f1 of the first fixating member 1, the two adjacent second protrusions s1, s2 of the second fixating member 2, and the base portion b2 of the second fixating member 2, when the fixing arrangement 10 is in the assembled state.

Moreover, when the fixing arrangement 10 is in the assembled state, each of the number of second protrusions s1 protrudes into a gap 4' between two adjacent first protrusions f1, f2 of the plurality of first protrusions f1, f2 to fixate an elongated object 5 in a space formed between the tip T2 of the second protrusion s1, s2, the base portion b1 of the first fixating member 1, and the two adjacent first protrusions f1, f2 of the plurality of first protrusions f1, f2.

In Fig. 4, only one tip T2 of the number of second protrusions s1 of the second fixating member 2 has been indicated with the reference sign "T2" for reasons of brevity and clarity. Likewise, in Fig. 4, only two adjacent first protrusions f1 of the plurality of first protrusions f1, f2 of the first fixating member 1 have been marked with the reference sign "f1" for reasons of brevity and clarity.

According to the embodiments illustrated in Fig. 3 and Fig. 4, the first and second fixating members 1, 2 are configured such that the elongated object 5 obtains an abutting contact against the tip T2 of the second protrusion s1 of the second fixating member 2 and the two adjacent first protrusions f1, f2 of the first fixating member 1, when the fixing arrangement 10 is in the assembled state. However, according to further embodiments, the first and second fixating members 1, 2 may be configured in another manner, for example such that the elongated object 5 obtains an abutting contact against the tip T2 of the second protrusion s1 of the second fixating member 2, the two adjacent first protrusions f1, f2 of the first fixating member 1, and the base portion b1 of the first fixating member 1, when the fixing arrangement 10 is in the assembled state.

As seen in Fig. 4, the tip T2 of each of the number of second protrusions s1 is located closer to the base portion b1 of the first fixating member 1 than the tip T1 of each of the number of first protrusions f1 when the fixing arrangement 10 is in an assembled state. Moreover, the tip T1 of each of the number of first protrusions f1 is located closer to the base portion b2 of the second fixating member 2 than the tip T2 of each of the number of second protrusions s1 when the fixing arrangement 10 is in an assembled state.

Due to the features of the fixing arrangement 10 explained above, a large number of elongated objects 5 can be fixated relative to a portion 20' of the vehicle 20 a space-efficient manner. That is, the fixing arrangement 10 can fixate a large number of elongated objects 5 using a small total space. As seen in Fig. 4, due to the features of the fixing arrangement 10, elongated objects 5 are fixated along a first row r1' and a second row r2', wherein the second row r2' is located at a distance from the first row r1' as measured along the directions d2, d3 in which the fixing arrangement 10 is assembled. Thereby, conditions are provided for a compact fixing arrangement 10 capable of fixating a large number of elongated objects 5 relative to a portion 20' of the vehicle 20.

According to the embodiments illustrated in Fig. 3 and Fig. 4, the fixing arrangement 10 is configured for fixating fourteen elongated objects 5 relative to a portion 20' of the vehicle 20. According to further embodiments, the fixing arrangement 10 may be configured for fixating another number of elongated objects 5 relative to a portion 20' of the vehicle 20, such as a number between 4 and 50, or a number between 4 and 30.

As mentioned, according to the illustrated embodiments, the portion 20' of the vehicle 20 is an electrical junction box and the elongated objects 5 is a number of electric cables of a high voltage electrical system 60 of the vehicle 20. According to these embodiments, the fixing arrangement 10 fixates the elongated objects 5 relative to the portion 20' of the vehicle 20 in order to prevent oblique entry angles of the elongated objects 5 relative to the portion 20' of the vehicle 20 as well as movement of the elongated objects 5 relative to the portion 20' of the vehicle 20. If the elongated objects 5 are allowed to move relative to the portion 20' of the vehicle 20, as well as if entry angles of the elongated objects 5 relative to the portion 20' of the vehicle 20 become too great, leakage of water may occur into the portion 20' of the vehicle 20, i.e., into the electrical junction box. However, due to the features of the fixing arrangement 10 according to embodiments herein, the elongated objects 5 can be fixated relative to the portion 20' of the vehicle 20 in a simple, secure, space-efficient, and cost-efficient manner.

Moreover, as understood from the above, the fixing arrangement 10, as referred to herein, may be used to fixate elongated objects 5 relative to other types of portions of vehicles 20, such as for example a portion of a frame, a portion of a sub-frame, a portion of a body of the vehicle 20, a portion of a chassis of the vehicle 20, a portion of a cab of the vehicle 20, or the like.

According to the illustrated embodiments, each of the first and second fixating members 1, 2 is formed by an elastic material, i.e., a material having a low elastic module. Each of the first and second fixating members 1, 2 may be formed by an elastic polymer, a rubber-based material, or the like.

Moreover, according to the embodiments illustrated in Fig. 3 and Fig. 4, each of the number of first protrusions f1 is tapered and each of the number of second protrusions s1 is tapered. In more detail, according to the embodiments illustrated in Fig. 3 and Fig. 4, the each of the number of first protrusions f1 is tapered in a direction d2 from the base portion b1 of the first fixating member 1 and each of the number of second protrusions s1 is tapered in a direction d3 from the base portion b2 of the second fixating member 2. According to further embodiments, at least some of the number of first and second protrusions f1, s1 may be tapered.

As explained with reference to Fig. 2, the fixing arrangement 10 is configured to fixate elongated objects 5 extending through the spaces along a first direction d1. Moreover, in Fig. 2, a plane P1 is indicated. The plane P1 is perpendicular to the first direction d1. The plane P1 is also indicated in Fig. 3 and Fig. 4. In Fig. 3 and Fig. 4, the plane P1 is perpendicular to a viewing direction of Fig. 3 and Fig. 4. As clearly seen in Fig. 2 - Fig. 4, according to these embodiments, each of the number of first protrusions f1 and each of the number of second protrusions s1 is tapered in the plane P1 perpendicular to the first direction d1. According to further embodiments, at least some of the number of first protrusions f1 and at least some of the number of second protrusions s1 may be tapered in a plane P1 perpendicular to the first direction d1.

According to the embodiments illustrated in Fig. 3 and Fig. 4, the tapering of the number of first protrusions f1 is such that an angle between the direction d2 and side walls of each of the number of first protrusions f1 is approximately 10 degrees. Likewise, according to the embodiments illustrated in Fig. 3 and Fig. 4, the tapering of the number of second protrusions s1 is such that an angle between the direction d3 and side walls of each of the number of second protrusions s1 is approximately 10 degrees. According to further embodiments, the tapering of the number of first and second protrusions f1, s2 may be such that the angle between the respective directions d2, d3 and side walls of each of the number of first and second protrusions f1, s2 is within the range of 1 - 65 degrees or is within the range of 3 - 25 degrees.

According to the embodiments illustrated in Fig. 3 and Fig. 4, each of the number of first protrusions f1 comprises two through holes 7, 7'. In Fig. 3, only some of the through holes 7, 7' have been provided with a reference sign and in Fig. 3, and the reference signs for the through holes have been omitted in Fig. 4 for reasons of brevity and clarity. According to further embodiments, each of the number of first protrusions f1 may comprises another number of through holes 7, 7'. Moreover, according to further embodiments, only some of the number of first protrusions f1 may comprise a through hole 7, 7'.

Likewise, according to the embodiments illustrated in Fig. 3 and Fig. 4, each of the number of second protrusions s1 comprises two through holes 7, 7'. In Fig. 3, only some of the through holes 7, 7' of the number of second protrusions s1 have been provided with a reference sign and in Fig. 3, and the reference signs for the through holes have been omitted in Fig. 4 for reasons of brevity and clarity. According to further embodiments, each of the number of second protrusions s1 may comprises another number of through holes 7, 7'. Moreover, according to further embodiments, only some of the number of second protrusions s1 may comprise a through hole 7, 7'.

In Fig. 3, a centre line cl of one first protrusion f1 has been indicated. According to the illustrated embodiments, a centre line cl of each of the through holes 7, 7' of the first and second fixating members 1, 2 is substantially parallel to the first direction d1. In other words, according to the illustrated embodiments, the centre line cl of each of the through holes 7, 7' of the first and second fixating members 1, 2 is substantially perpendicular to the plane P1. According to further embodiments, the angle between the first direction d1 and a centre line cl of each of the through holes 7, 7' of the first and second fixating members 1, 2 may be less than 25 degrees or may be less than 15 degrees.

The through holes 7, 7' improve the deformation characteristics of the number of first and second protrusions f1, s1. In this manner, conditions are provided for a more resilient support and fixation of the elongated objects 5. Moreover, due to the improved deformation characteristics, conditions are provided for at least partially deforming the number of first and second protrusions f1, s1 upon assembly of the fixing arrangement 10, i.e., upon a relative movement of the first and second fixating members 1, 2 in the directions d2, d3 to the assembled state illustrated in Fig. 4. In this manner, the elongated objects 5 can be fixated in a further secure and reliable manner relative to the portion 20' of the vehicle 20.

A further advantage of the through holes 7, 7' is explained in the following. According to the embodiments illustrated in Fig. 3 and Fig. 4, the fixing arrangement 10 comprises a first bracket member 11 attached to the first fixating member 1 and a second bracket member 12 attached to the second fixating member 2. According to these embodiments, the fixing arrangement 10 comprises a number of holding members 17 attaching the first bracket member 11 to the first fixating member 1 by each protruding through a through hole 7' of the first fixating member 1. Likewise, the fixing arrangement 10 comprises a number of holding members 17 attaching the second bracket member 12 to the second fixating member 2 by each protruding through a through hole 7' of the second fixating member 2. The holding members 17 and the through holes 7' have been marked with reference signs in Fig. 3 whereas the reference signs for these objects have been omitted in Fig. 4 for reasons of brevity and clarity.

According to the illustrated embodiments, each holding member 17 comprises a strap. According to further embodiments, each holding member 17 may comprise another type of member, such as a cable tie, a wire, or the like.

In this manner, the first bracket member 11 is attached to the first fixating member 1 in a simple, reliable, and cost-efficient manner. Likewise, the second bracket member 12 is attached to the second fixating member 2 in a simple, reliable, and cost-efficient manner. However, according to further embodiments, the first bracket member 11 may be attached to the first fixating member 1 in another manner and the second bracket member 12 may be attached to the second fixating member 2 in another manner than described above. For example, a portion of the first fixating member 1 may be moulded around at least a portion of the first bracket member 11 and a portion of the second fixating member 2 may be moulded around at least a portion of the second bracket member 12. As an alternative, or in addition, one or both of the first and second fixating members 1, 2 may be attached to respective first and second bracket member 11, 12 by an adhesive or an interference fit.

According to the embodiments illustrated in Fig. 3 and Fig. 4, the first fixating member 1 is configured to be assembled relative to the second fixating member 2 by attaching the first bracket member 11 to the second bracket member 12. In more detail, according to these embodiments, the first bracket member 11 is configured to be attached to the second bracket member 12 using a number of fastening elements 15.

According to the illustrated embodiments, the number of fastening elements 15 comprises two screws. According to further embodiments, the first bracket member 11 may be configured to be attached to the second bracket member 12 using another type of fastening elements, such as bolts, nuts, rivets, or the like. Moreover, the first bracket member 11 may be configured to be attached to the second bracket member 12 using another number of fastening elements than two. Furthermore, the first bracket member 11 may be configured to be attached to the second bracket member 12 in another manner than described above.

As understood from the above, due to the features of the fixing arrangement 10, a fixing arrangement 10 is provided having conditions for significantly facilitating the process of fixating a number of elongated objects 5 relative to a portion 20' of a vehicle 20. This is because an assembler, or an assembling machine, may position a number of elongated objects 5 in the gaps 4' between pairs of adjacent first protrusions f1, f2 of the first fixating member 1 and may position a number of elongated objects 5 between pairs of adjacent second protrusions s1, s2 of the second fixating member 2. Then an assembler, or an assembling machine, may assemble the first fixating member 1 relative to the second fixating member 2 by attaching the first bracket member 11 to the second bracket member 12 using the fastening elements 15.

In this manner, a large number of elongated objects 5 can be fixated relative to the portion 20' of the vehicle 20 in a quick, simple, secure, space-efficient, and cost-efficient manner using low number of fastening elements 15, such as two fastening elements 15 only.

Accordingly, due to the features of the fixing arrangement 10, the fixing arrangement 10 provides conditions for a quick, simple, and cost-efficient fixation of elongated objects 5 relative to the portion 20' of the vehicle 20. As a further result, a fixing arrangement 10 is provided having conditions for reducing assembling costs and manufacturing costs of vehicles 20.

Moreover, due to the features of the fixing arrangement 10, the fixing arrangement 10 provides conditions for a quick, simple, and cost-efficient removal of fixation of the elongated objects 5 from the portion 20' of the vehicle 20, for example during service, repair, and maintenance of the vehicle 20. As understood from the above, according to the illustrated embodiments, the first fixating member 1 can be removed from the second fixating member 2 simply by detaching the fastening elements 15 and moving the first fixating member 1 relative to the second fixating member 2 in the direction d3 indicated in Fig. 3.

Furthermore, as indicated above, a fixing arrangement 10 is provided capable of fixing elongated objects 5, such as electrical cables, wire arrangements, and ducts, in a reliable and secure manner. This is because the fixing arrangement 10 is configured to fixate the elongated objects 5 in the spaces formed between tips T1 of first protrusions f1 of the first fixating member 1 and adjacent second protrusions s1 of the second fixating member 2 as well as in spaces formed between tips T2 of second protrusions s1 of the second fixating member 2 and adjacent first protrusions f1 of the first fixating member 1.

As understood from the above, the plurality of first protrusions f1, f2, as referred to herein, refers to all first protrusions f1, f2 of the first fixating member 1. Moreover, the number of first protrusions f1, as referred to herein, comprise the first protrusions f1 among the plurality of first protrusions f1, f2 which protrude into a gap 4 between two adjacent second protrusions s1, s2 when the fixing arrangement 10 is in the assembled state. The number of first protrusions f1 may thus be a sub-set of the plurality of first protrusions f1, f2, wherein each first protrusion f1 within the sub-set of the plurality of first protrusions f1, f2 protrudes into a gap 4 between two adjacent second protrusions s1, s2 of the plurality of second protrusions s1, s2 when the fixing arrangement 10 is in the assembled state.

According to the embodiments illustrated in Fig. 3 and Fig. 4, the number of first protrusions f1 is a sub-set of the plurality of first protrusions f1, f2. That is, according to the embodiments illustrated in Fig. 3 and Fig. 4, the first fixating member 1 comprises eight first protrusions f1, f2 in total. As seen in Fig. 4, seven first protrusions f1 protrude into a gap 4 between two adjacent second protrusions s1, s2 when the fixing arrangement 10 is in the assembled state and one first protrusion f2 does not protrude into a gap 4 between two adjacent second protrusions s1, s2 when the fixing arrangement 10 is in the assembled state.

In other words, according to the illustrated embodiments, the plurality of first protrusions f1, f2 as referred to herein comprises all eight first protrusions f1, f2 of the first fixating member 1, whereas the number of first protrusions f1, as referred to herein, comprises the seven first protrusions f1 which protrude into a gap 4 between two adjacent second protrusions s1, s2 when the fixing arrangement 10 is in the assembled state.

As seen in Fig. 3 and Fig. 4, the first protrusion f2 which do not protrude into a gap 4 between two adjacent second protrusions s1, s2, when the fixing arrangement 10 is in the assembled state, is an end protrusion of the first row r1 of first protrusions f1, f2. According to the illustrated embodiments, this first protrusion f2 has a different design than number of first protrusions f1.

In more detail, this first protrusion f2 has a first side wall forming a delimiting surface of a gap into which one second protrusion s1 of the second fixating member 2 can protrude into. According to the illustrated embodiments, the first side wall is provided at an angle of approximately 10 degrees relative to the direction d2 as measured in the plane P1. Moreover, this first protrusion f2 comprises a second side wall which do not form a delimiting surface of a gap into which one second protrusion s1 of the second fixating member 2 can protrude into. According to the illustrated embodiments, the second side wall of this protrusion f2 is substantially parallel to the direction d2. In this manner, a more compact fixing arrangement 10 can be provided.

As understood from the above, the number of first protrusions f1 can be said to constitute a first type of first protrusions f1, wherein the first protrusion f2, which do not protrude into a gap 4 between two adjacent second protrusions s1, s2 when the fixing arrangement 10 is in the assembled state, can be said to constitute a second type of first protrusions f2, wherein the second type of protrusion f2 is different from the first type of protrusion f1.

Moreover, as understood from the above, according to the embodiments illustrated in Fig. 3 and Fig. 4, each of the plurality of first protrusions f1, f2 of the first fixating member 1 comprises at least one side wall forming a delimiting surface of a gap 4' into which one second protrusion s1 of the second fixating member 2 can protrude into.

The second fixating member 2 according to the illustrated embodiments 3 and Fig. 4 has a substantially identical but mirrored design and layout as the first fixating member 1.

In other words, the number of second protrusions s1 of the second fixating member 2 comprises seven second protrusions s1 with substantially identical but mirrored design and layout as the first type of first protrusions f1 explained above. Moreover, the plurality of second protrusions s1, s2 comprises one second protrusion s2 with substantially identical but mirrored design and layout as the second type of first protrusions f2 explained above.

Moreover, like above, this second protrusion s2, which do not protrude into a gap 4' between two adjacent first protrusions f1, f2 when the fixing arrangement 10 is in the assembled state, is an end protrusion of the second row r2 of second protrusions s1, s2 of the second fixating member 2. Moreover, according to the embodiments illustrated in Fig. 3 and Fig. 4, each of the plurality of second protrusions s1, s2 of the second fixating member 2 comprises at least one side wall forming a delimiting surface of a gap 4 into which one first protrusion f1 of the first fixating member 1 can protrude into.

In other words, as a result of these features, according to the embodiments illustrated in Fig. 3 and Fig. 4, the sum of the plurality of first and second protrusions f1, f2, s1, s2 minus the sum of the number of first and second protrusions f1, s1 is equal to two. This is because only two first and second protrusions f2, s2 of the plurality of first and second protrusions f1, f2, s1, s2 do not protrude into a gap 4, 4' formed between adjacent protrusions f1, f2, s1, s2 of the first and second fixating members 1, 2 when the fixing arrangement 10 is in the assembled state.

In this manner, a rigid fixation of elongated objects 5 can be ensured in a space-efficient manner. In other words, conditions are provided for a compact fixing arrangement 10 capable of fixating a large number of elongated objects 5.

As explained above, according to the illustrated embodiments, the first and second fixating members 1, 2 comprises the same number of protrusions f1, f2, s1, s2. However, according to further embodiments, one of the first and second fixating members 1, 2 may comprise one protrusion f1, f2, s1, s2 more than the other of the first and second fixating members 1, 2. According to such embodiments, the fixating member of the first and second fixating members 1, 2 which comprises one more protrusion f1, f2, s1, s2 may comprise two protrusions f2, s2 of the second type explained above, i.e., two protrusions f2, s2 which do not protrude into gaps 4, 4' formed between adjacent protrusions f1, f2, s1, s2 of the first and second fixating members 1, 2 when the fixing arrangement 10 is in the assembled state. Accordingly, also in such embodiments, the sum of the plurality of first and second protrusions f1, f2, s1, s2 minus the sum of the number of first and second protrusions f1, s1 may be equal to two.

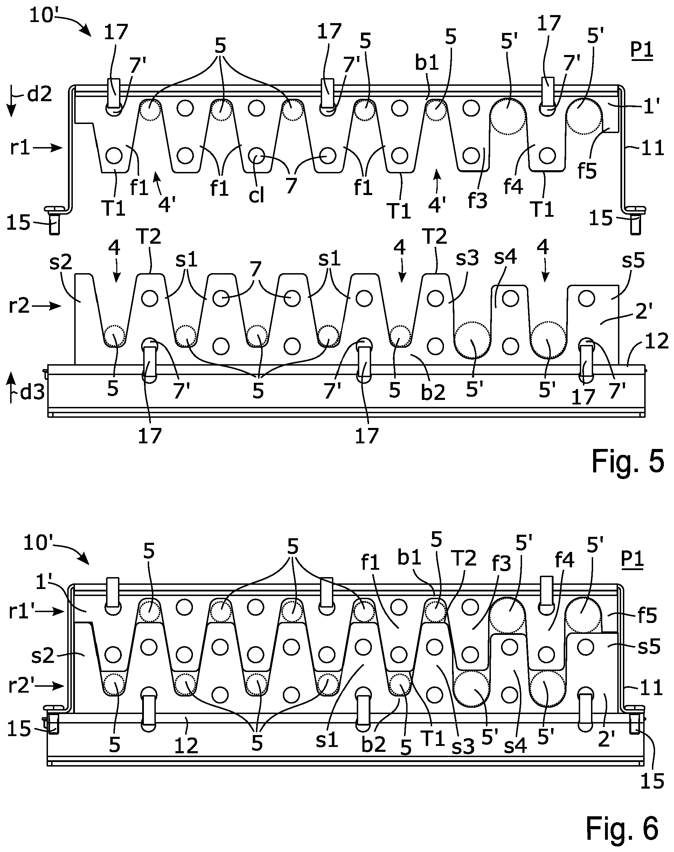

Fig. 5 illustrates a fixing arrangement 10' according to some further embodiments in an unassembled state. The fixing arrangement 10' comprises the same features, functions, and advantages as the fixing arrangement 10 explained with reference to Fig. 1 - Fig. 4, with some differences explained below. Most of the shared features, functions, and advantages are not further explained herein for reasons of brevity and clarity. Moreover, as pointed out above, like reference signs refer to like elements throughout.

As schematically indicated in Fig. 1, the vehicle 20 may comprise a fixing arrangement 10' according to the embodiments illustrated in Fig. 5.

According to the embodiments illustrated in Fig. 5, the first fixating member 1' comprises five first protrusions f1 of the first type explained above. Moreover, according to the embodiments illustrated in Fig. 5, the first fixating member 1' comprises one first protrusion f3 of a third type, one first protrusion f4 of a fourth type, and one first protrusion f5 of a fifth type. The features and functions of these first protrusions f3, f4, f5 are further explained below. As understood from the above, also in the embodiments illustrated in Fig. 5, the first fixating member 1' comprises eight first protrusions f1, f3, f4, f5 in total.

The second fixating member 2' according to the embodiments illustrated in Fig. 5 comprises four second protrusions s1 of the first type explained above and one second protrusion s2 of the second type explained above. Moreover, according to the embodiments illustrated in Fig. 5, the second fixating member 2' comprises one second protrusion s3 of a third type, one second protrusion s4 of a fourth type, and one second protrusion s5 of a fifth type. Thus, also in the embodiments illustrated in Fig. 5, the second fixating member 2' comprises eight second protrusions s1, s2, s3, s4, s5 in total.

In accordance with the embodiments explained with reference to Fig. 1 - Fig. 4, the first fixating member 1' according to the embodiments illustrated in Fig. 5 comprises a plurality of first protrusions f1, f3, f4, f5 and a number of first protrusions f1, f3, f4 which is a sub-set of the plurality of first protrusions f1, f3, f4, f5. Moreover, the second fixating member 2' comprises a plurality of second protrusions s1, s2, s3, s4, s5 and a number of second protrusions s1, s3, s4, and wherein the number of second protrusions s1, s3, s4 is a sub-set of the plurality of second protrusions s1, s2, s3, s4, s5. The reference sign for the plurality of second protrusions s1, s2, s3, s4, s5 of the second fixating member 2' is abbreviated "s1 - s5" in some places herein for reasons of brevity and clarity.

Also in the embodiments illustrated in Fig. 5, the fixing arrangement 10' is configured for fixating fourteen elongated objects 5, 5' relative to a portion 20' of the vehicle 20. However, as seen in Fig. 5, according to these embodiments, the fixing arrangement 10' is configured to fixate ten elongated objects 5 of the type explained with reference to Fig. 1 - Fig. 4 and four elongated objects 5' of a larger type. As seen in Fig. 4, each of the larger type of elongated objects 5' has a larger diameter measured in the plane P1 than the elongated objects 5 of the type explained with reference to Fig. 1 - Fig. 4.

Fig. 6 illustrates the fixing arrangement 10', according to the embodiments illustrated in Fig. 5 in an assembled state. As seen in Fig. 5 and Fig. 6, the fixing arrangement 10' is configured to fixate the larger type of elongated objects 5' by providing larger spaces between tips T1 of some of the plurality of first protrusions f1, f3, f4, f5, the base portion b2 of the second fixating member 2', and adjacent second protrusions s1 - s5 when the fixing arrangement 10' is in the assembled state.

Likewise, according to the embodiments illustrated in Fig. 5 and Fig. 6, the fixing arrangement 10' is configured to fixate the larger type of elongated objects 5' by providing larger spaces between tips T2 of some of the plurality of second protrusions s1 - s5, the base portion b1 of the first fixating member 1', and adjacent first protrusions f1, f3, f4, f5 when the fixing arrangement 10' is in the assembled state.

The larger type of elongated object 5' may be a larger type of electric cable. Alternatively, the larger type of elongated object 5' may be another type of elongated object 5', such as a wire arrangement, a duct for supplying a fluid, such as coolant, air, oil, or the like.

As seen in Fig. 5, according to the illustrated embodiments, the first protrusion f3 of the third type comprises one first side wall forming a delimiting surface of a gap 4' into which the second protrusion s3 of the third type of the second fixating member 2' can protrude into and one second side wall forming a delimiting surface of a gap 4' into which the second protrusion s4 of the fourth type of the second fixating member 2' can protrude into. As seen in Fig. 5 and Fig. 6, the first side wall of the first protrusion f3 of the third type is angled relative to the direction d2 at an angle of approximately 10 degrees relative to the direction d2 as measured in the plane P1. Moreover, the second side wall of the first protrusion f3 of the third type is substantially parallel to the direction d2.

Moreover, according to these embodiments, the second protrusion s3 of the third type comprises one first side wall forming a delimiting surface of a gap 4 into which the first protrusion f1 of the first type of the first fixating member 1' can protrude into and one second side wall forming a delimiting surface of a gap 4 into which the first protrusion f3 of the third type of the first fixating member 1' can protrude into.

As seen in Fig. 5 and Fig. 6, the first side wall of the second protrusion s3 of the third type is angled relative to the direction d3 at an angle of approximately 10 degrees relative to the direction d3 as measured in the plane P1. Moreover, the second side wall of the second protrusion s3 of the third type comprises a first portion being angled relative to the direction d3 at an angle of approximately 10 degrees relative to the direction d3 as measured in the plane P1 and a second portion, located closer to the base portion b2 of the second fixating member 2' than the first portion, and wherein the second portion is substantially parallel to the direction d3.

Furthermore, according to these embodiments, the second protrusion s4 of the fourth type comprises one first side wall forming a delimiting surface of a gap 4 into which the first protrusion f3 of the third type of the first fixating member 1' can protrude into and one second side wall forming a delimiting surface of a gap 4 into which the first protrusion f4 of the fourth type can protrude into. As seen in Fig. 5 and Fig. 6, according to these embodiments, each of the first and second side walls of the second protrusion s4 of the fourth type is substantially parallel to the direction d3. Moreover, according to these embodiments, the first protrusion f4 of the fourth type has substantially identical but mirrored design and layout as the second protrusion s4 of the fourth type.

According to the embodiments illustrated in Fig. 5 and Fig. 6, the first protrusion f5 of the fifth type is not configured to protrude into a gap 4 between adjacent second protrusions s1 - s5 when the fixing arrangement 10' is in the assembled state. Likewise, the second protrusion s5 of the fifth type is not configured to protrude into a gap 4' between adjacent first protrusions f1, f3, f4, f5 when the fixing arrangement 10' is in the assembled state. Instead, a tip of the first protrusion f5 of the fifth type is configured to abut against a tip of the second protrusion s5 of the fifth type when the fixing arrangement 10' is in the assembled state.

According to the illustrated embodiments, of the first protrusion f5 of the fifth type is an end protrusion of the first row r1 of first protrusions f1, f3, f4, f5 of the first fixating member 1'.

Likewise, the second protrusion s5 of the fifth type is an end protrusion of the second row r2 of second protrusions s1 - s5 of the second fixating member 2'.

As explained above, the second fixating member 2' according to the embodiments illustrated in Fig. 5 and Fig. 6 comprises a second protrusion s2 of the second type explained above. The second protrusion s2 of the second type is not configured to protrude into a gap 4' between adjacent first protrusions f1, f3, f4, f5 when the fixing arrangement 10' is in the assembled state. Thus, according to the embodiments illustrated in Fig. 5 and Fig. 6 the fixing arrangement 10' comprises three protrusions s2, s5, f5 which do not protrude into gaps 4, 4' formed between adjacent protrusions f1, f3, f4, f5, s1 - s5 of the first and second fixating members 1', 2' when the fixing arrangement 10' is in the assembled state.

Thus, according to the embodiments illustrated in Fig. 5 and Fig. 6, the sum of the plurality of first and second protrusions f1, f3, f4, f5, s1 - s5 minus the sum of the number of first and second protrusions f1, f3, f4, s1, s3, s4 is equal to three.

Also in the embodiments illustrated in Fig. 5 and Fig. 6, the fixing arrangement 10' comprises a first bracket member 11 attached to the first fixating member 1' and a second bracket member 12 attached to the second fixating member 2'. The first and second bracket members 11, 12 are attached to the respective first and second fixating members 1', 2' in the same manner as explained with reference to Fig. 3 and Fig. 4.

Moreover, also in the embodiments illustrated in Fig. 5 and Fig. 6, each of the first and second fixating members 1', 2' is formed by an elastic material, i.e., a material having a low elastic module. Moreover, also in these embodiments, each of the first and second fixating members 1', 2' may be formed by an elastic polymer, a rubber-based material, or the like.

Furthermore, also in the embodiments illustrated in Fig. 5 and Fig. 6, each of the first and second fixating members 1', 2' comprises through holes 7, 7' having the same features, functions, and advantages as the through holes 7, 7' of the first and second fixating members 1, 2 explained with reference to Fig. 3 and Fig. 4.

The wording "substantially parallel to", as used herein, may encompass that the angle between the objects referred to is less than 7 degrees, or is less than 4 degrees.

The wording "substantially perpendicular to", as used herein, may encompass that the angle between the objects or vectors referred to is within the range of 83 - 97 degrees or is within the range of 86 - 94 degrees.

The wording "substantially straight", as used herein, may encompass that the object referred to deviates less than 10% from the shape of a flat plane.

The wording "substantially equally spaced", as used herein, may encompass that the relative distances between the objects referred to deviates less than 10% from each other.

Since the fixing arrangement 10, 10' according to the embodiments illustrated in Fig. 1 - Fig. 6 is configured to fixate a number of elongated objects 5, 5' in the form of electric cables, the fixing arrangement 10, 10' according to these embodiments may also be referred to as a cable fixing arrangement, an electric cable fixing arrangement, or the like.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A fixing arrangement (10, 10') configured to fixate a number of elongated objects (5, 5') relative to a portion (20') of a vehicle (20), the fixing arrangement (10, 10') comprising:
- a first fixating member (1, 1') comprising a plurality of first protrusions (f1 - f5), and
- a second fixating member (2, 2') comprising a plurality of second protrusions (s1 - s5),
wherein the plurality of first protrusions (f1 - f5) comprises a number of first protrusions (f1, f3, f4) each configured to protrude into a gap (4) between two adjacent second protrusions (s1 - s5) to fixate an elongated object (5, 5') in a space formed between a tip (T1) of the first protrusion (f1, f3, f4) and the two adjacent second protrusions (s1 - s5), and
wherein the plurality of second protrusions (s1 - s5) comprises a number of second protrusions (s1, s3, s4) each configured to protrude into a gap (4') between two adjacent first protrusions (f1 - f4) to fixate an elongated object (5, 5') in a space formed between a tip (T2) of the second protrusion (s1, s3, s4) and the two adjacent first protrusions (f1 - f4).

2. The fixing arrangement (10, 10') according to claim 1, wherein the number of first protrusions (f1, f3, f4) comprises two or more first protrusions (f1, f3, f4), and wherein the number of second protrusions (s1, s3, s4) comprises two or more second protrusions (s1, s3, s4).

3. The fixing arrangement (10, 10') according to any one of the preceding claims, wherein the first fixating member (1, 1') comprises a base portion (b1), wherein each of the plurality of first protrusions (f1 - f5) protrudes from the base portion (b1), and wherein each of the number of second protrusions (s1, s3, s4) is configured to protrude into a gap (4') between two adjacent first protrusions (f1 - f4) to fixate an elongated object (5, 5') in a space formed between the tip (T2) of the second protrusion (s1, s3, s4), the base portion (b1) of the first fixating member (1, 1'), and the two adjacent first protrusions (f1 - f4).

4. The fixing arrangement (10, 10') according to claim 3, wherein the tip (T2) of each of the number of second protrusions (s1, s3, s4) is located closer to the base portion (b1) of the first fixating member (1, 1') than the tip (T1) of each of the number of first protrusions (f1, f3, f4) when the fixing arrangement (10, 10') is in an assembled state.

5. The fixing arrangement (10, 10') according to any one of the preceding claims, wherein the first fixating member (1, 1') comprises a base portion (b1), and wherein at least some of the number of first protrusions (f1, f3, f4) protrude from the base portion (b1) and are tapered in a direction (d2) from the base portion (b1).

6. The fixing arrangement (10, 10') according to any one of the preceding claims, wherein the second fixating member (2, 2') comprises a base portion (b2), and wherein at least some of the number of second protrusions (s1, s3, s4) protrude from the base portion (b2) and are tapered in a direction (d3) from the base portion (b2).

7. The fixing arrangement (10, 10') according to any one of the preceding claims, wherein the fixing arrangement (10, 10') is configured to fixate elongated objects (5, 5') extending through the spaces along a first direction (d1), and wherein at least some of the number of first and second protrusions (f1, f3, f4, s1, s3, s4) are tapered in a plane (P1) perpendicular to the first direction (d1).

8. The fixing arrangement (10, 10') according to any one of the preceding claims, wherein at least one of the first and second fixating members (1, 1', 2, 2') is formed by an elastic material.

9. The fixing arrangement (10, 10') according to any one of the preceding claims, wherein the first fixating member (1, 1') is formed by an elastic material, and wherein at least some of the number of first protrusions (f1, f3, f4) comprise a through hole (7).

10. The fixing arrangement (10, 10') according to claim 9, wherein the fixing arrangement (10, 10') is configured to fixate elongated objects (5, 5') extending through the spaces along a first direction (d1), and wherein the angle between the first direction (d1) and a centre line (cl) of the through hole (7) is less than 25 degrees or is less than 15 degrees.

11. The fixing arrangement (10, 10') according to any one of the preceding claims, wherein the fixing arrangement (10, 10') comprises a first bracket member (11) attached to the first fixating member (1, 1') and a second bracket member (12) attached to the second fixating member (2, 2'), and wherein the first fixating member (1, 1') is configured to be assembled relative to the second fixating member (2, 2') by attaching the first bracket member (11) to the second bracket member (12).

12. The fixing arrangement (10, 10') according to claim 11, wherein the first bracket member (11) is configured to be attached to the second bracket member (12) using a number of fastening elements (15).

13. The fixing arrangement (10, 10') according to any one of the preceding claims, wherein the first fixating member (1, 1') comprises a number of through holes (7'), and wherein the fixing arrangement (10, 10') comprises a number of holding members (17) attaching the first bracket member (11) to the first fixating member (1, 1') by protruding through the number of through holes (7').

14. A vehicle (20) comprising a number of elongated objects (5, 5') and a fixing arrangement (10, 10') according to any one of the preceding claims, wherein the fixing arrangement (10, 10') is configured to fixate the number of elongated objects (5, 5') relative to a portion (20') of the vehicle (20).

15. The vehicle (20) according to claim 14, wherein the vehicle (20) comprises an electric propulsion system (60) and a high voltage electrical system (30) configured to provide electricity to the electric propulsion system (60), and wherein the number of elongated objects (5, 5') comprises one or more electrical cables of the high voltage electrical system (60).

## Patentansprüche

1. Befestigungsanordnung (10, 10'), die dazu ausgebildet ist, mehrere längliche Gegenstände (5, 5') relativ zu einem Abschnitt (20') eines Fahrzeugs (20) zu befestigen, wobei die Befestigungsanordnung (10, 10') umfasst:
- ein erstes Befestigungselement (1, 1') mit einer Mehrzahl erster Vorsprünge (f1 - f5) und
- ein zweites Befestigungselement (2, 2') mit einer Mehrzahl zweiter Vorsprünge (s1 - s5),
wobei die Mehrzahl erster Vorsprünge (f1 - f5) mehrere erste Vorsprünge (f1, f3, f4) aufweist, die jeweils derart ausgebildet sind, dass sie in einen Spalt (4) zwischen zwei benachbarten zweiten Vorsprüngen (s1 - s5) ragen, um einen länglichen Gegenstand (5, 5') in einem Raum zu befestigen, der zwischen einer Spitze (T1) des ersten Vorsprungs (f1, f3, f4) und den zwei benachbarten zweiten Vorsprüngen (s1 - s5) ausgebildet ist, und
wobei die Mehrzahl zweiter Vorsprünge (s1 - s5) mehrere zweite Vorsprünge (s1, s3, s4) aufweist, die jeweils derart ausgebildet sind, dass sie in einen Spalt (4') zwischen zwei benachbarten ersten Vorsprüngen (f1 - f4) ragen, um einen länglichen Gegenstand (5, 5') in einem Raum zu befestigen, der zwischen einer Spitze (T2) des zweiten Vorsprungs (s1, s3, s4) und den zwei benachbarten ersten Vorsprüngen (f1 - f4) ausgebildet ist.

2. Befestigungsanordnung (10, 10') nach Anspruch 1, wobei die mehreren ersten Vorsprünge (f1, f3, f4) zwei oder mehr erste Vorsprünge (f1, f3, f4) umfassen und wobei die mehreren zweiten Vorsprünge (s1, s3, s4) zwei oder mehr zweite Vorsprünge (s1, s3, s4) umfassen.

3. Befestigungsanordnung (10, 10') nach einem der vorangehenden Ansprüche, wobei das erste Befestigungselement (1, 1') einen Basisabschnitt (b1) umfasst, wobei jeder der Mehrzahl erster Vorsprünge (f1 - f5) von dem Basisabschnitt (b1) hervorragt und wobei jeder der mehreren zweiten Vorsprünge (s1, s3, s4) derart ausgebildet ist, dass er in einen Spalt (4') zwischen zwei benachbarten ersten Vorsprüngen (f1 - f4) ragt, um einen länglichen Gegenstand (5, 5') in einem Raum zu befestigen, der zwischen der Spitze (T2) des zweiten Vorsprungs (s1, s3, s4) des Basisabschnitts (b1) des ersten Befestigungselements (1, 1') und den zwei benachbarten ersten Vorsprüngen (f1 - f4) ausgebildet ist.

4. Befestigungsanordnung (10, 10') nach Anspruch 3, wobei die Spitze (T2) jedes der mehreren zweiten Vorsprünge (s1, s3, s4) näher an dem Basisabschnitt (b1) des ersten Befestigungselements (1, 1') liegt als die Spitze (T1) jedes der mehreren ersten Vorsprünge (f1, f3, f4), wenn sich die Befestigungsanordnung (10, 10') in einem montieren Zustand befindet.

5. Befestigungsanordnung (10, 10') nach einem der vorangehenden Ansprüche, wobei das erste Befestigungselement (1, 1') einen Basisabschnitt (b1) umfasst und wobei wenigstens einige der mehreren ersten Vorsprünge (f1, f3, f4) von dem Basisabschnitt (b1) hervorragen und sich in einer Richtung (d2) von dem Basisabschnitt (b1) verjüngen.

6. Befestigungsanordnung (10, 10') nach einem der vorangehenden Ansprüche, wobei das zweite Befestigungselement (2, 2') einen Basisabschnitt (b2) umfasst und wobei wenigstens einige der mehreren zweiten Vorsprünge (s 1, s3, s4) von dem Basisabschnitt (b2) hervorragen und sich in einer Richtung (d3) von dem Basisabschnitt (b2) verjüngen.

7. Befestigungsanordnung (10, 10') nach einem der vorangehenden Ansprüche, wobei die Befestigungsanordnung (10, 10') dazu ausgebildet ist, längliche Gegenstände (5, 5') zu befestigen, die sich entlang einer ersten Richtung (d1) durch die Räume erstrecken, und wobei sich wenigstens einige der mehreren ersten und zweiten Vorsprünge (f1, f3, f4, s1, s3, s4) in einer Ebene (P1) senkrecht zu der ersten Richtung (d1) verjüngen.

8. Befestigungsanordnung (10, 10') nach einem der vorangehenden Ansprüche, wobei wenigstens das erste oder das zweite Befestigungselement (1, 1', 2, 2') aus einem elastischen Material gebildet ist.

9. Befestigungsanordnung (10, 10') nach einem der vorangehenden Ansprüche, wobei das erste Befestigungselement (1, 1') aus einem elastischen Material gebildet ist und wobei wenigstens einige der mehreren ersten Vorsprünge (f1, f3, f4) eine Durchgangsbohrung (7) aufweisen.

10. Befestigungsanordnung (10, 10') nach Anspruch 9, wobei die Befestigungsanordnung (10, 10') dazu ausgebildet ist, längliche Gegenstände (5, 5') zu befestigen, die sich entlang einer ersten Richtung (d1) durch die Räume erstrecken, und wobei der Winkel zwischen der ersten Richtung (d1) und einer Mittellinie (cl) der Durchgangsbohrung (7) weniger als 25 Grad oder weniger als 15 Grad beträgt.

11. Befestigungsanordnung (10, 10') nach einem der vorangehenden Ansprüche, wobei die Befestigungsanordnung (10, 10') ein an dem ersten Befestigungselement (1, 1') angebrachtes erstes Halterungselement (11) und ein an dem zweiten Befestigungselement (2, 2') angebrachtes zweites Halterungselement (12) umfasst und wobei das erste Befestigungselement (1, 1') derart ausgebildet ist, dass es relativ zu dem zweiten Befestigungselement (2, 2') montiert wird, indem das erste Halterungselement (11) an dem zweiten Halterungselement (12) angebracht wird.

12. Befestigungsanordnung (10, 10') nach Anspruch 11, wobei das erste Halterungselement (11) zur Anbringung an dem zweiten Halterungselement (12) mit mehreren Fixierelementen (15) ausgebildet ist.

13. Befestigungsanordnung (10, 10') nach einem der vorangehenden Ansprüche, wobei das erste Befestigungselement (1, 1') mehrere Durchgangsbohrungen (7') aufweist und wobei die Befestigungsanordnung (10, 10') mehrere Halteelemente (17) aufweist, die das erste Halterungselement (11) an dem ersten Befestigungselement (1, 1') anbringen, indem sie durch die mehreren Durchgangsbohrungen (7') ragen.

14. Fahrzeug (20) mit mehreren länglichen Gegenständen (5, 5') und einer Befestigungsanordnung (10, 10') nach einem der vorangehenden Ansprüche, wobei die Befestigungsanordnung (10, 10') dazu ausgebildet ist, mehrere längliche Gegenstände (5, 5') relativ zu einem Abschnitt (20') des Fahrzeugs (20) zu befestigen.

15. Fahrzeug (20) nach Anspruch 14, wobei das Fahrzeug (20) ein elektrisches Antriebssystem (60) und ein elektrisches Hochspannungssystem (30) umfasst, das dazu ausgebildet ist, das elektrische Antriebssystem (60) mit Strom zu versorgen, und wobei die mehreren länglichen Gegenstände (5, 5') eine oder mehrere elektrische Leitungen des elektrischen Hochspannungssystems (60) umfassen.

## Revendications

1. Agencement de fixation (10, 10') configuré pour fixer un certain nombre d'objets allongés (5, 5') par rapport à une portion (20') d'un véhicule (20), l'agencement de fixation (10, 10') comprenant :
- un premier organe de fixation (1, 1') comprenant une pluralité de premières saillies (f1 - f5), et
- un deuxième organe de fixation (2, 2') comprenant une pluralité de deuxièmes saillies (s1 - s5),
dans lequel la pluralité de premières saillies (f1 - f5) comprend un certain nombre de premières saillies (f1, f3, f4) chacune configurée pour faire saillie dans un intervalle (4) entre deux deuxièmes saillies (s1 - s5) adjacentes pour fixer un objet allongé (5, 5') dans un espace formé entre une pointe (T1) de la première saillie (f1, f3, f4) et les deux deuxièmes saillies (s1 - s5) adjacentes, et
dans lequel la pluralité de deuxièmes saillies (s1 - s5) comprend un certain nombre de deuxièmes saillies (s1, s3, s4) configurées chacune pour faire saillie dans un intervalle (4') entre deux premières saillies (f1 - f4) adjacentes pour fixer un objet allongé (5, 5') dans un espace formé entre une pointe (T2) de la deuxième saillie (s1, s3, s4) et les deux premières saillies (f1 - f4) adjacentes.

2. Agencement de fixation (10, 10') selon la revendication 1, dans lequel le nombre de premières saillies (f1, f3, f4) comprend deux premières saillies (f1, f3, f4) ou plus, et dans lequel le nombre de deuxièmes saillies (s1, s3, s4) comprend deux deuxièmes saillies (s1, s3, s4) ou plus.

3. Agencement de fixation (10, 10') selon l'une quelconque des revendications précédentes, dans lequel le premier organe de fixation (1, 1') comprend une portion de base (b1), dans lequel chacune de la pluralité de premières saillies (f1 - f5) fait saillie depuis la portion de base (b1), et dans lequel chacune du nombre de deuxièmes saillies (s1, s3, s4) est configurée pour faire saillie dans un intervalle (4') entre deux premières saillies (f1 - f4) adjacentes pour fixer un objet allongé (5, 5') dans un espace formé entre la pointe (T2) de la deuxième saillie (s1, s3, s4), la portion de base (b1) du premier organe de fixation (1, 1') et les deux premières saillies (f1 - f4) adjacentes.

4. Agencement de fixation (10, 10') selon la revendication 3, dans lequel la pointe (T2) de chacune du nombre de deuxièmes saillies (s1, s3, s4) est située plus près de la portion de base (b1) du premier organe de fixation (1, 1') que de la pointe (T1) de chacune du nombre de premières saillies (f1, f3, f4) lorsque l'agencement de fixation (10, 10') est dans un état assemblé.

5. Agencement de fixation (10, 10') selon l'une quelconque des revendications précédentes, dans lequel le premier organe de fixation (1, 1') comprend une portion de base (b1), et dans lequel au moins certaines du nombre de premières saillies (f1, f3, f4) font saillie à partir de la portion de base (b1) et sont effilées dans une direction (d2) à partir de la portion de base (b1).

6. Agencement de fixation (10, 10') selon l'une quelconque des revendications précédentes, dans lequel le deuxième organe de fixation (2, 2') comprend une portion de base (b2), et dans lequel au moins certaines du nombre de deuxièmes saillies (s1, s3, s4) font saillie à partir de la portion de base (b2) et sont effilées dans une direction (d3) à partir de la portion de base (b2).

7. Agencement de fixation (10, 10') selon l'une quelconque des revendications précédentes, dans lequel l'agencement de fixation (10, 10') est configuré pour fixer des objets allongés (5, 5') s'étendant à travers les espaces le long d'une première direction (d1), et dans lequel au moins certaines du nombre de premières et deuxièmes saillies (f1, f3, f4, s1, s3, s4) sont effilées dans un plan (P1) perpendiculaire à la première direction (d1).

8. Agencement de fixation (10, 10') selon l'une quelconque des revendications précédentes, dans lequel au moins l'un des premier et deuxième organes de fixation (1, 1', 2, 2') est formé par un matériau élastique.

9. Agencement de fixation (10, 10') selon l'une quelconque des revendications précédentes, dans lequel le premier organe de fixation (1, 1') est formé par un matériau élastique, et dans lequel au moins certaines du nombre de premières saillies (f1, f3, f4) comprennent un trou traversant (7).

10. Agencement de fixation (10, 10') selon la revendication 9, dans lequel l'agencement de fixation (10, 10') est configuré pour fixer des objets allongés (5, 5') s'étendant à travers les espaces le long d'une première direction (d1), et dans lequel l'angle entre la première direction (d1) et une ligne centrale (cl) du trou traversant (7) est inférieur à 25 degrés ou est inférieur à 15 degrés.

11. Agencement de fixation (10, 10') selon l'une quelconque des revendications précédentes, dans lequel l'agencement de fixation (10, 10') comprend un premier organe de support (11) attaché au premier organe de fixation (1, 1') et un deuxième organe de support (12) attaché au deuxième organe de fixation (2, 2'), et dans lequel le premier organe de fixation (1, 1') est configuré pour être assemblé par rapport au deuxième organe de fixation (2, 2') en attachant le premier organe de support (11) au deuxième organe de support (12).

12. Agencement de fixation (10, 10') selon la revendication 11, dans lequel le premier organe de support (11) est configuré pour être attaché au deuxième organe de support (12) en utilisant un certain nombre d'éléments d'arrimage (15).

13. Agencement de fixation (10, 10') selon l'une quelconque des revendications précédentes, dans lequel le premier organe de fixation (1, 1') comprend un certain nombre de trous traversants (7'), et dans lequel l'agencement de fixation (10, 10') comprend un certain nombre d'organes de maintien (17) attachant le premier organe de support (11) au premier organe de fixation (1, 1') en faisant saillie à travers le nombre de trous traversants (7').

14. Véhicule (20) comprenant un certain nombre d'objets allongés (5, 5') et un agencement de fixation (10, 10') selon l'une quelconque des revendications précédentes, dans lequel l'agencement de fixation (10, 10') est configuré pour fixer le nombre d'objets allongés (5, 5') par rapport à une portion (20') du véhicule (20) .

15. Véhicule (20) selon la revendication 14, dans lequel le véhicule (20) comprend un système de propulsion électrique (60) et un système électrique haute tension (30) configuré pour fournir de l'électricité au système de propulsion électrique (60), et dans lequel le nombre d'objets allongés (5, 5') comprend un ou plusieurs câbles électriques du système électrique haute tension (60).
